# DEMANDE DE BREVET EUROPEEN

(11) **EP 0 978 318 A1**
(43) Date de publication de la demande: **09.02.2000**
(21) Numéro de dépôt: 99401671.5
(22) Date de dépôt: 05.07.1999
(51) Int. Cl.: B02C 19/14, B02C 23/04, B02C 23/24

(54) **Dispositif et procédé de broyage de recipients fermes contenant une poudre**

(30) Priorité: 05.08.1998 FR 9810053
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Leturmy, Marc, 78940 La Queue-les-Yvelines (FR); Pioger, Frédéric, 92370 Chaville (FR); Soula, Richard, 44120 Vertou (FR)
(74) Mandataire: Mellul, Sylvie Lisette

(57) **Abrégé**

L'invention concerne un dispositif (1) de broyage de récipients (3) contenant une poudre, comprenant un broyeur (5) disposé dans une enceinte de confinement (7) de la poudre libérée lors du broyage. Le dispositif (1) comprend en outre des moyens (30) de conditionnement de l'atmosphère de l'enceinte de confinement (7) avec un gaz inerte dont la teneur en azote est supérieure à 90 % volumiques environ.

## Description

L'invention est relative à un dispositif de broyage de récipients contenant une poudre, tels que par exemple des cartouches de toner pour des photocopieuses ou des imprimantes laser, ce dispositif comprenant un broyeur disposé dans une enceinte de confinement de la poudre libérée lors du broyage.

Dans le but de recycler des cartouches vidées de toner des photocopieurs, une technique habituellement utilisée consiste à les broyer dans un dispositif de broyage comprenant un broyeur disposé dans une enceinte de confinement, et à aspirer la poudre résiduelle libérée lors du broyage au travers d'une ou plusieurs ouvertures ménagées dans la paroi de l'enceinte de confinement au moyen d'un système d'aspiration pour récupérer la poudre de toner.

Mais dans les dispositifs connus, les poudres de toner qui possèdent généralement une granulométrie inférieure à 500 micromètres, sont mélangées à de l'air ambiant et se trouvent en partie en suspension dans l'enceinte de confinement, créant ainsi, sous certaines conditions, un mélange inflammable et/ou explosif.

Afin de prévenir les risques d'inflammation et/ou d'explosion, on est actuellement contraint de limiter la quantité de cartouches broyées par unité de temps et d'équiper les dispositifs connus d'un système de ventilation puissant et coûteux. De plus, avant le broyage, les cartouches sont généralement soumises à une étape manuelle préliminaire de vidage du toner résiduel.

Malgré ces efforts, on a constaté que les risques d'explosion et/ou d'inflammation ne sont pas complètement maîtrisés.

L'invention vise à pallier ces divers inconvénients en proposant un dispositif de broyage plus sûr en fonctionnement, permettant de traiter un nombre de récipients plus élevé par unité de temps, tout en supprimant l'étape manuelle préliminaire de vidage des récipients.

A cet effet, l'invention a pour objet un dispositif de broyage de récipients contenant une poudre, comprenant un broyeur disposé dans une enceinte de confinement de la poudre libérée lors du broyage, et se caractérisant en ce qu'il comprend en outre des moyens de conditionnement de l'atmosphère de l'enceinte de confinement avec un gaz inerte dont la teneur en azote est supérieure à 90 % volumiques environ.

Le dispositif de broyage selon l'invention peut de plus comporter une ou plusieurs des caractéristiques suivantes :
- la teneur en azote dudit gaz inerte est environ 95 % volumiques ;
- la teneur en oxygène dudit gaz inerte est inférieure à 5 % volumiques environ ;
- les moyens de conditionnement comprennent une source dudit gaz inerte et des moyens d'introduction dudit gaz inerte dans l'enceinte de confinement ;
- la source de gaz inerte est une installation de production d'azote par séparation d'air par voie membranaire ;
- l'installation de production dudit gaz inerte par voie membranaire comporte outre un séparateur d'air par voie membranaire, alimentant un réservoir tampon à partir duquel l'enceinte de confinement est alimentée en gaz inerte, un réservoir d'azote liquide de secours ;
- sur la ligne de gaz reliant le réservoir tampon à l'enceinte de confinement, est disposé un organe d'étranglement configuré selon un fonctionnement normalement ouvert (vocabulaire familier pour l'homme du métier, signifiant que l'organe, par exemple une électrovanne, est ouvert -i.e passant - en l'absence d'électricité) ;
- l'enceinte de confinement comprend une entrée des récipients et une sortie des récipients broyés, pour permettre le broyage en continu, et le dispositif comprend en outre au niveau de l'entrée un sas d'introduction des récipients pour empêcher l'air ambiant d'entrer dans l'enceinte de confinement et des moyens d'aspiration en sortie pour évacuer la poudre libérée lors du broyage ;
- les récipients sont introduits dans l'enceinte de confinement par un convoyeur, le sas entourant ledit convoyeur et comprenant des injecteurs du gaz inerte disposés de part et d'autre de la courroie de convoyage du convoyeur ;
- les moyens de conditionnement comprennent en outre des moyens de mesure de la teneur en oxygène de l'atmosphère dans l'enceinte de confinement et des moyens de régulation du débit de gaz inerte introduit par ladite source en fonction de la teneur en oxygène mesurée par lesdits moyens de mesure ;
- les moyens de conditionnement comprennent en outre des moyens de comparaison de la teneur en oxygène de l'atmosphère de l'enceinte de confinement, mesurée par lesdits moyens de mesure, avec un seuil prédéterminé, et des moyens d'alarme commandés par lesdits moyens de comparaison lorsque la teneur mesurée en oxygène de l'atmosphère de l'enceinte de confinement franchit un seuil prédéterminé.

L'invention concerne également un procédé de broyage de récipients contenant une poudre, à l'aide d'un broyeur disposé dans une enceinte de confinement de la poudre libérée lors du broyage, caractérisé en ce qu'il comprend l'étape de conditionner l'atmosphère de l'enceinte de confinement avec un gaz inerte dont la teneur en azote est supérieure à 90 % volumiques environ.

Le procédé selon l'invention peut également adopter l'une ou plusieurs des caractéristiques suivantes :
- la teneur en oxygène dudit gaz inerte est inférieure à 5 % volumiques environ ;
- on réalise ladite étape de conditionnement en alimentant l'enceinte de confinement à partir d'une source de gaz inerte qui est une installation de production d'azote par séparation d'air par voie membranaire ;
- ladite installation de production d'azote par voie membranaire comporte outre un séparateur d'air par voie membranaire alimentant un réservoir tampon à partir duquel l'enceinte de confinement est alimentée en gaz inerte, un réservoir d'azote liquide de secours ;
- l'enceinte de confinement est alimentée en gaz inerte à partir du réservoir tampon au travers d'un organe d'étranglement situé sur la ligne de gaz reliant le réservoir tampon à l'enceinte de confinement, organe d'étranglement configuré selon un fonctionnement normalement ouvert ;
- dans le cas où un arrêt d'urgence du broyeur doit être déclenché, on continue d'alimenter en gaz inerte l'enceinte de confinement à partir dudit réservoir tampon, par le fait que ledit organe d'étranglement est configuré en fonctionnement normalement ouvert. ;
- on mesure la teneur en oxygène de l'atmosphère dans l'enceinte de confinement et l'on compare la teneur en oxygène de l'atmosphère ainsi mesurée dans l'enceinte de confinement avec un seuil prédéterminé, et on dispose de moyens d'alarme aptes à être commandés selon le résultat de la comparaison, lorsque la teneur mesurée en oxygène de l'atmosphère de l'enceinte de confinement franchit un seuil prédéterminé.
- on mesure la teneur en oxygène de l'atmosphère dans l'enceinte de confinement et on régule le débit de gaz inerte introduit en fonction de la teneur en oxygène ainsi mesurée ;
- on alimente l'enceinte de confinement selon la procédure suivante :
   i) selon un régime normal de fonctionnement, on alimente l'enceinte de confinement en gaz inerte à l'aide d'un débit Qm de maintien, à partir dudit réservoir tampon ;
   j) on mesure en continu la teneur en oxygène de l'atmosphère dans l'enceinte de confinement;
   k) dès qu'un seuil limite S1 pour la dite teneur en oxygène mesurée est dépassé, on arrête l'introduction dans le broyeur des récipients à broyer, et on alimente l'enceinte de confinement en gaz inerte à l'aide d'un débit Qp de purge, à partir dudit réservoir d'azote liquide de secours, afin de pouvoir obtenir de faire redescendre la teneur en oxygène mesurée dans l'enceinte de confinement au niveau ou en deçà de S1, Qp étant supérieur à Qm ;
   l) dès que la teneur en oxygène mesurée dans l'enceinte de confinement est repassée au niveau ou en deçà de S1, on repasse en régime normal de fonctionnement où on alimente l'enceinte de confinement en gaz inerte à l'aide du débit Qm de maintien, à partir dudit réservoir tampon, et où l'on redémarre l'introduction dans le broyeur des récipients à broyer.
   m) si l'application du débit Qp de purge ne parvient pas à faire redescendre la teneur en oxygène mesurée dans l'enceinte de confinement comme décrit dans l'étape l), on procède à l'arrêt du broyeur.

On comprendra que comme sur toute installation industrielle, l'arrêt d'urgence du broyeur peut se produire pour de multiples causes, y compris le fait que pour une raison ou une autre l'électricité soit ou doive être coupée sur le site.

D'autres caractéristiques et avantages de l'invention ressortiront de la description suivante, donnée à titre d'exemple, sans caractère limitatif, en regard des dessins annexés sur lesquels :
- la figure 1 montre un schéma d'un dispositif de broyage conforme à l'invention ;
- la figure 2 est une représentation schématique d'une installation globale incluant un dispositif de broyage conforme à l'invention, tel qu'alimenté en gaz inerte à partir d'un séparateur d'air par voie membranaire.

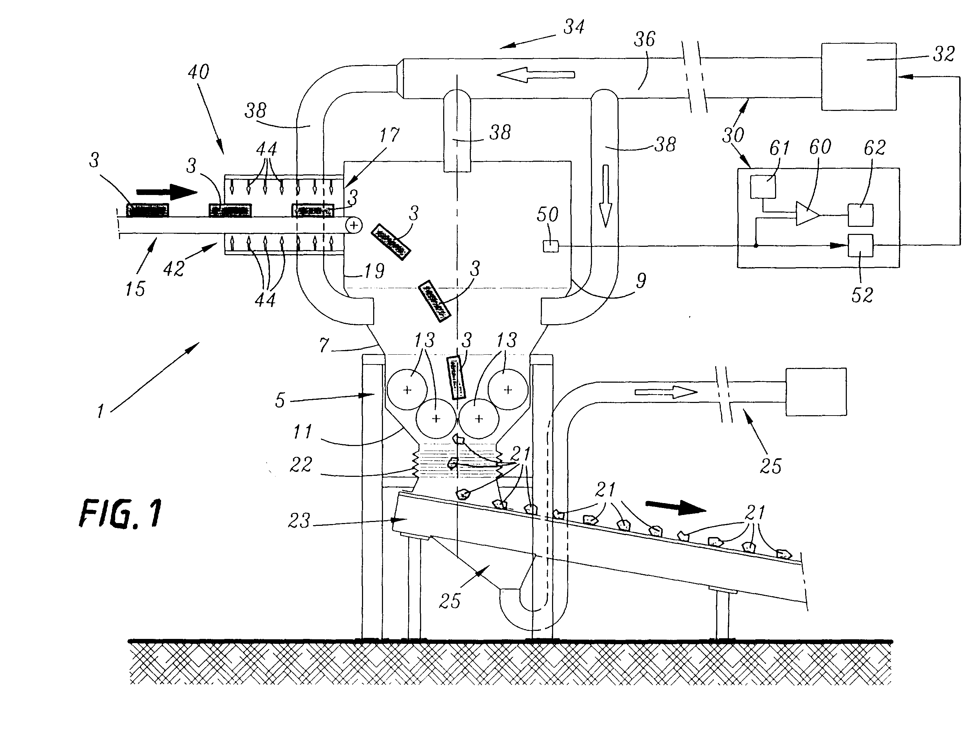

Sur la figure 1 est représenté de façon schématique un dispositif de broyage 1 de récipients 3 contenant une poudre, tels que par exemple des cartouches de toner pour des photocopieuses ou des imprimantes laser.

Ce dispositif 1 comprend un broyeur 5 disposé dans une enceinte de confinement 7 de la poudre libérée lors du broyage. Cette enceinte 7 se divise en une trémie 9 et une chambre de broyage 11 proprement dite dans laquelle sont installés les tambours de broyage 13 du broyeur 5.

Le dispositif 1 est chargé par l'intermédiaire d'un convoyeur 15 par exemple à courroie. Pour acheminer les récipients 3 à broyer, ce convoyeur 15 fait saillie dans la trémie 9 au travers d'une ouverture 17 ménagée dans une paroi latérale 19 de la trémie 9.

En aval des tambours de broyage 13, les morceaux 21 de récipients broyés retombent au travers d'un soufflet de sortie 22 sur une grille vibrante inclinée 23 permettant d'évacuer les morceaux broyés 21 et de récupérer par l'intermédiaire d'un système d'aspiration 25 disposé en dessous de la grille 23 le toner sortant du soufflet 22.

Par ailleurs, le dispositif de broyage 1 comprend des moyens 30 de conditionnement de l'atmosphère de l'enceinte 7 avec un gaz inerte dont la teneur en azote est supérieure à 90 % volumiques environ, de préférence égale à 95 % volumiques environ, pour prévenir les risques d'inflammation et/ ou d'explosion.

De plus, la teneur en oxygène dudit gaz inerte est avantageusement inférieure à 5 % volumiques environ. On comprendra à la lecture de tout ce qui précède que la teneur en oxygène du gaz inerte va dépendre des caractéristiques de la poudre contenue dans les récipients, notamment en terme de granulométrie et de domaine d'explosivité.

Les moyens 30 de conditionnement comprennent une source 32 du gaz inerte et des moyens 34 d'introduction dudit gaz inerte dans l'enceinte 7.

Avantageusement, ladite source 32 est une installation de production dudit gaz inerte par séparation d'air par membranes, ce qui permet de fournir un gaz inerte à l'enceinte 7 à un coût réduit. Mais, on peut bien entendu utiliser toute autre source de gaz comme par exemple des réservoirs de stockage ou des installations de production cryogéniques d'un gaz inerte ayant les caractéristiques décrites ci-dessus.

Les moyens 34 sont par exemple formés par un conduit central 36 qui se ramifie en des conduits secondaires 38 débouchant à différents endroits dans l'enceinte 7.

Afin d'empêcher l'air environnant à entrer par l'intermédiaire de l'ouverture 17 dans l'enceinte 7, il est prévu un sas 40 entourant le convoyeur 15.

Avantageusement, le sas 40 comprend au moins un rideau flexible 42, par exemple formé de franges de caoutchouc, disposé à l'entrée du sas 40, et des injecteurs 44 de jets laminaires du gaz inerte disposés de part et d'autre de la courroie de convoyage du convoyeur 15.

En outre lesdits moyens 30 de conditionnement comprennent des moyens 50 de mesure de la teneur en oxygène de l'atmosphère dans l'enceinte 7 et, raccordés à ces moyens 50, des moyens 52 de régulation du débit de gaz inerte introduit par ladite source 32 en fonction de la teneur en oxygène mesurée de l'atmosphère à l'intérieur de l'enceinte 7. Ainsi, lorsque la teneur en oxygène augmente, les moyens de régulation 52 commandent à la source 32 d'augmenter le débit de gaz introduit dans l'enceinte 7.

Par ailleurs, les moyens 50 de conditionnement comprennent, reliés aux moyens 30 de mesure, des moyens 60 de comparaison de la teneur en oxygène de l'atmosphère mesurée par lesdits moyens 50 de mesure à un seuil prédéterminé enregistré dans une mémoire 61, et des moyens 62 d'alarme commandés par lesdits moyens de comparaison 60 lorsque la teneur en oxygène mesurée de l'atmosphère franchit le seuil prédéterminé. Ceci permet d'accroître encore plus la sécurité du dispositif selon l'invention.

Grâce aux moyens de conditionnement 30 de l'atmosphère dans l'enceinte 7 avec un gaz inerte, le nombre de récipients broyés par unité de temps peut sensiblement être augmenté tout en diminuant les risques d'inflammation ou d'explosion, et ceci sans nécessiter l'étape manuelle de vidange des récipients actuellement couramment pratiquée.

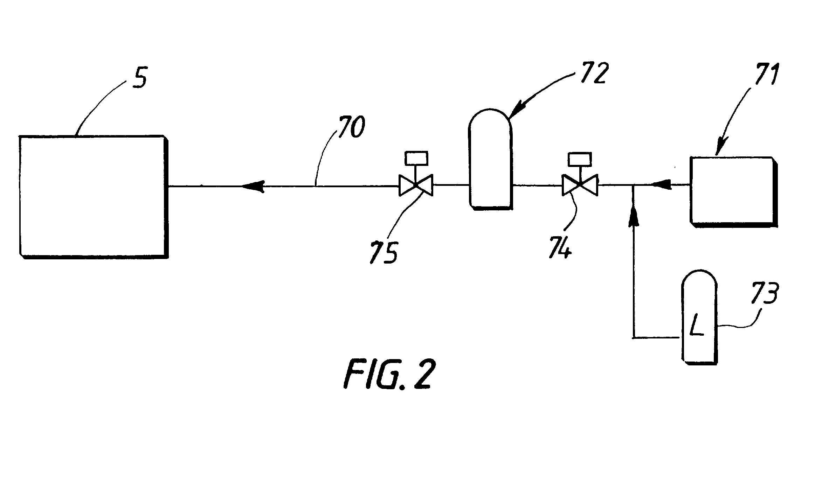

La figure 2 est quant à elle une représentation schématique d'une installation globale incluant un dispositif de broyage 5 conforme à l'invention, tel qu'alimenté en gaz inerte à partir d'un séparateur d'air par voie membranaire. Cette installation globale comporte alors les éléments suivants :
- le broyeur 5 est alimenté en gaz par une ligne de gaz 70, à partir d'une capacité tampon 72, elle même alimentée en gaz par le séparateur 71 d'air par voie membranaire. Le fonctionnement de tels séparateurs, et notamment les cycles de remplissage de la capacité tampon 72 sont bien connus de l'homme du métier, et ne sera donc pas repris ici.
- on note également sur la figure la présence d'un réservoir 73 d'azote liquide de secours, permettant non seulement de faire parvenir du gaz au broyeur 5 même dans des cas d'arrêt ou de disfonctionnement du séparateur 71, mais également d'utiliser cet azote d'origine cryogénique (et donc plus pur que celui produit par le séparateur 71), pour purger l'enceinte de confinement à l'aide du débit Qp tel que précédemment décrit ;
- l'installation comporte par ailleurs, sur la ligne 70 entre la capacité tampon 72 et le broyeur 5, une électrovanne 75 « normalement ouverte » (donc ouverte en cas d'absence d'électricité), tout particulièrement avantageuse selon l'invention par le fait qu'elle permet, en cas d'arrêt d'urgence de l'électricité du site ou du broyeur, de poursuivre l'alimentation en gaz inerte du broyeur au moins durant un temps correspondant au niveau de remplissage de la capacité 72 au moment où l'arrêt d'urgence est déclenché ;
- l'installation comporte également, en amont de la capacité 72, une vanne d'arrêt (quelle soit manuelle ou automatique, généralement « normalement fermée »).

## Revendications

1. Dispositif (1) de broyage de récipients (3) contenant une poudre, comprenant un broyeur (5) disposé dans une enceinte de confinement (7) de la poudre libérée lors du broyage, caractérisé en ce qu'il comprend en outre des moyens (30) de conditionnement de l'atmosphère de l'enceinte de confinement (7) avec un gaz inerte dont la teneur en azote est supérieure à 90 % volumiques environ.

2. Dispositif selon la revendication 1, caractérisé en ce que la teneur en oxygène dudit gaz inerte est inférieure à 5 % volumiques environ.

3. Dispositif selon l'une des revendications 1 ou 2, caractérisé en ce que lesdits moyens (30) de conditionnement comprennent une source (32) dudit gaz inerte et des moyens (34) d'introduction dudit gaz inerte dans l'enceinte de confinement (7).

4. Dispositif selon la revendication 3, caractérisé en ce que ladite source (32) est une installation (71, 72, 73) de production dudit gaz inerte par séparation d'air par voie membranaire.

5. Dispositif selon la revendication 4, caractérisé en ce que l'installation de production dudit gaz inerte comporte outre un séparateur (71) d'air par voie membranaire, alimentant un réservoir (72) tampon à partir duquel l'enceinte de confinement (7) est alimentée en gaz inerte, un réservoir (73) d'azote liquide de secours.

6. Dispositif selon la revendication 5, caractérisé en ce que sur la ligne (70) de gaz reliant le réservoir tampon (72) à l'enceinte de confinement, est disposé un organe (75) d'étranglement configuré en fonctionnement normalement ouvert .

7. Dispositif selon l'une quelconque des revendications 1 à 6, dans lequel l'enceinte de confinement (7) comprend une entrée (17) desdits récipients et une sortie (22) des récipients broyés (21) pour permettre le broyage en continu, caractérisé en ce qu'il comprend en outre au niveau de l'entrée (17) un sas (40) d'introduction desdits récipients (3) pour empêcher l'air ambiant d'entrer dans ladite enceinte de confinement (7) et des moyens (25) d'aspiration en sortie pour évacuer la poudre libérée lors du broyage.

8. Dispositif selon la revendication 7, dans lequel les récipients (3) sont introduits dans l'enceinte de confinement (7) par un convoyeur (15), caractérisé en ce que le sas (40) entoure ledit convoyeur (15) et comprend des injecteurs (44) dudit gaz inerte disposés de part et d'autre de la courroie de convoyage du convoyeur (15).

9. Dispositif selon la revendication 3 prise ensemble avec l'une quelconque des revendications 1 à 8, caractérisé en ce que lesdits moyens de conditionnement (30) comprennent en outre des moyens (50) de mesure de la teneur en oxygène de l'atmosphère dans l'enceinte de confinement (7) et des moyens (52) de régulation du débit de gaz inerte introduit par ladite source (32) en fonction de la teneur en oxygène mesurée par lesdits moyens de mesure (50).

10. Dispositif selon la revendication 9, caractérisé en ce que les moyens (30) de conditionnement comprennent en outre des moyens (60) de comparaison de la teneur en oxygène de l'atmosphère de l'enceinte de confinement (7), mesurée par lesdits moyens de mesure (50) avec un seuil prédéterminé, et des moyens d'alarme (62) commandés par lesdits moyens (60) de comparaison lorsque la teneur mesurée en oxygène de l'atmosphère de l'enceinte de confinement (7) franchit un seuil prédéterminé.

11. Procédé de broyage de récipients (3) contenant une poudre, à l'aide d'un broyeur (5) disposé dans une enceinte de confinement (7) de la poudre libérée lors du broyage, caractérisé en ce qu'il comprend l'étape de conditionner l'atmosphère de l'enceinte de confinement (7) avec un gaz inerte dont la teneur en azote est supérieure à 90 % volumiques environ.

12. Procédé selon la revendication 11, caractérisé en ce que la teneur en oxygène dudit gaz inerte est inférieure à 5 % volumiques environ.

13. Procédé selon l'une des revendications 11 ou 12, caractérisé en ce que l'on réalise ladite étape de conditionnement en alimentant l'enceinte de confinement à partir d'une source (32) de gaz inerte qui est une installation de production d'azote par séparation d'air par voie membranaire.

14. Procédé selon la revendication 13, caractérisé en ce que ladite installation de production d'azote comporte outre un séparateur d'air par voie membranaire alimentant un réservoir tampon à partir duquel l'enceinte de confinement (7) est alimentée en gaz inerte, un réservoir d'azote liquide de secours.

15. Procédé selon la revendication 14, caractérisé en ce que l'enceinte de confinement (7) est alimentée en gaz inerte à partir du réservoir tampon au travers d'un organe d'étranglement situé sur la ligne de gaz reliant le réservoir tampon à l'enceinte de confinement, organe d'étranglement configuré selon un fonctionnement normalement ouvert .

16. Procédé selon la revendication 15, caractérisé en ce que dans le cas où un arrêt d'urgence du broyeur doit être déclenché, on continue d'alimenter en gaz inerte l'enceinte de confinement à partir dudit réservoir tampon, par le fait que ledit organe d'étranglement est configuré selon un fonctionnement normalement ouvert.

17. Procédé selon l'une des revendications 11 à 16, caractérisé en ce que l'on mesure la teneur en oxygène de l'atmosphère dans l'enceinte de confinement (7) et l'on compare la teneur en oxygène de l'atmosphère ainsi mesurée dans l'enceinte de confinement avec un seuil prédéterminé, et en ce que l'on dispose de moyens d'alarme (62) aptes à être commandés selon le résultat de la comparaison, lorsque la teneur mesurée en oxygène de l'atmosphère de l'enceinte de confinement (7) franchit un seuil prédéterminé.

18. Procédé selon l'une des revendications 11 à 17, caractérisé en ce que l'on mesure la teneur en oxygène de l'atmosphère dans l'enceinte de confinement (7) et en ce que l'on régule le débit de gaz inerte introduit en fonction de la teneur en oxygène ainsi mesurée.

19. Procédé selon l'une des revendications 14 à 16, caractérisé par la mise en oeuvre des mesures suivantes :
- selon un régime normal de fonctionnement, on alimente l'enceinte de confinement en gaz inerte à l'aide d'un débit Qm de maintien, à partir dudit réservoir tampon ;
- on mesure en continu la teneur en oxygène de l'atmosphère dans l'enceinte de confinement ;
- dès qu'un seuil limite S1 pour la dite teneur en oxygène mesurée est dépassé, on arrête l'introduction dans le broyeur des récipients à broyer, et on alimente l'enceinte de confinement en gaz inerte à l'aide d'un débit Qp de purge, à partir dudit réservoir d'azote liquide de secours, afin de pouvoir obtenir de faire redescendre la teneur en oxygène mesurée dans l'enceinte de confinement au niveau ou en deçà de S1, Qp étant supérieur à Qm ;
- dès que la teneur en oxygène mesurée dans l'enceinte de confinement est repassée au niveau ou en deçà de S1, on repasse en régime normal de fonctionnement où on alimente l'enceinte de confinement en gaz inerte à l'aide du débit Qm de maintien, à partir dudit réservoir tampon, et où l'on redémarre l'introduction dans le broyeur des récipients à broyer.

20. Procédé selon la revendication 19, caractérisé en ce que si l'application du débit Qp de purge ne parvient pas à faire redescendre la teneur en oxygène mesurée dans l'enceinte de confinement au niveau ou en deçà de S1 après une durée prédéterminée, on procède à l'arrêt du broyeur.
